Europäisches Patentamt

European Patent Office    (11) Numéro de publication: **0 245 150**
                                                        **A1**
Office européen des brevets

(19)

(12) **DEMANDE DE BREVET EUROPEEN**

(21) Numéro de dépôt: **87400954.1**    (51) Int. Cl.⁴: **C 01 G 23/00, C 04 B 35/46**

(22) Date de dépôt: **24.04.87**

(30) Priorité: **29.04.86 FR 8606205**

(71) Demandeur: **COMPAGNIE EUROPEENNE DE COMPOSANTS ELECTRONIQUES LCC, 50, rue Jean -Pierre Timbaud B.P. 301, F-92402 Courbevoie (FR)**

(43) Date de publication de la demande: **11.11.87 Bulletin 87/46**

(72) Inventeur: **Beauger, Alain, THOMSON-CSF SCPI 19, avenue de Messine, F-75008 Paris (FR)**
Inventeur: **Wittmann, Roland, THOMSON-CSF SCPI 19, avenue de Messine, F-75008 Paris (FR)**

(74) Mandataire: **Ruellan-Lemonnier, Brigitte et al, THOMSON-CSF SCPI 19, avenue de Messine, F-75008 Paris (FR)**

(84) Etats contractants désignés: **DE GB IT NL**

(54) **Procédé de fabrication de titanate de baryum par voie chimique.**

(57) L'invention concerne un procédé de fabrication du titanate de baryum par voie chimique comprenant des étapes de:
— formation d'un complexe du titane en solution aqueuse par le péroxyde d'hydrogène,
— dissolution dans cette solution d'une quantité stoechiométrique de baryum introduite sous forme de sel,
— mise en contact de la solution obtenue avec un échangeur d'ions solides ou liquides pour capturer les anions en solution et jusqu'à obtention d'un précipité,
— isolation du précipité,
— traitement de ce précipité jusqu'à obtention d'une poudre.

1

# PROCEDE DE FABRICATION DU TITANATE DE BARYUM PAR VOIE CHIMIQUE.

La présente invention concerne un procédé chimique d'élaboration du titanate de baryum.

Le titanate de baryum est connu depuis longtemps pour ses propriétés diélectriques. En particulier, sa constante diélectrique élevée (environ 2000 à une température de 20°C) le rend apte à la fabrication de condensateurs sous forme de disques ou de plaquettes, ou de condensateurs multicouches.

La synthèse thermique du matériau a été longtemps la seule méthode employée pour son élaboration. Selon cette méthode, un mélange intime de poudres de carbonate de baryum et d'oxyde de titane est porté à une température comprise entre 1000 et 1300°C. Ce procédé a l'avantage d'être simple à mettre en œuvre, mais il n'est pas exempt d'inconvénients. En premier lieu, les mécanismes de réaction conduisent à la formation de phases indésirables dont l'élimination est malaisée. D'autre part, la réalisation de poudres de granulométrie fine (diamètre des grains de l'ordre du micron) et resserrée que rendent nécessaire les évolutions récentes de l'art céramique appliqué à ce domaine, ne peut être effectuée par cette méthode que si le matériau résultant de la synthèse thermique est soumis à un broyage prolongé. Il en découle généralement une pollution importante du produit par des éléments étrangers du fait de l'abrasion des constituants du système de broyage employé.

La recherche a donc porté sur d'autres procédés de préparation qui, s'éloignant ainsi des procédés traditionnels de la céramique, font largement appel aux techniques de la chimie. D'une façon tout à fait générale, le principe des méthodes chimiques est d'obtenir la précipitation d'un composé contenant outre une partie volatilisable (radical organique, groupements hydroxyles, par exemple), du baryum et du titane en rapport stoechiométrique 1:1. On peut classer ces procédés chimiques en deux groupes selon que le milieu réactionnel est organique ou aqueux. Les méthodes de précipitation

2

du titanate de baryum par voie aqueuse sont nombreuses, mais généralement mal maîtrisées.

On connaît la méthode de précipitation par voie aqueuse comprenant les étapes suivantes : dissolution de tétrachlorure de titane dans une solution d'eau oxygénée, addition d'une quantité stoechiométrique de nitrate de baryum ($TiO_2/BaO = 1$), précipitation du complexe par élévation du pH à l'aide d'ammoniaque, filtration et lavage, séchage et calcination à une température supérieure à 1000°C. Il est manifeste que la méthode présente un certain nombre d'inconvénients liés d'une part à la présence des anions chlorures et des nitrates, et d'autre part à la déstabilisation du complexe formé par les lavages successifs. Le précipité obtenu est stoechiométrique mais les séquences de lavage détruisent une partie de sa structure et libèrent le baryum et le titane en solution. Le baryum est éliminé au cours du lavage, mais le titane précipite en partie sous forme d'hydroxyde ce qui conduit, après calcination, à un matériau non stoechiométrique.

Il est important, d'un point de vue industriel, d'améliorer les performances électriques du matériau tout en essayant d'augmenter la reproductibilité de ses propriétés.

Afin de pallier les inconvénients de l'art connu, la présente invention propose un procédé qui présente l'avantage d'effectuer simultanément la montée en pH (et par conséquent la précipitation du complexe) et la capture totale des anions $Cl^-$ et $NO_3^-$ en solution. L'étape fastidieuse du lavage est ainsi supprimée. Ce procédé permet également d'éviter les surconcentrations localisées d'anions hydroxydes $OH^-$ lors de l'introduction d'ammoniaque.

L'invention a donc pour objet un procédé de fabrication du titanate de baryum par voie chimique comprenant les étapes préparatoires suivantes :

- 1ère étape : formation d'un complexe du titane en solution aqueuse par le péroxyde d'hydrogène,

- 2ème étape : dissolution dans ladite solution d'une quantité stoechiométrique de baryum introduite sous forme de sel, caractérisé en ce que le procédé comprend en outre les étapes suivantes :

- 3ème étape : mise en contact de la solution obtenue à la deuxième étape avec un échangeur d'ions solides ou liquides pour capturer les anions en solution et jusqu'à obtention d'un précipité,

- 4ème étape : isolation du précipité,

- 5ème étape : traitement du précipité jusqu'à obtention d'une poudre.

La formation du complexe du titane s'effectue en ajoutant un sel de titane, de préférence le tétrachlorure de titane, à une solution d'eau oxygénée. Un sel de baryum (par exemple du nitrate, du chlorure ou du bromure) est ajouté à la solution jusqu'à complète dissolution. La stoechiométrie $TiO_2/BaO$ est ajustée à 1 par une pesée précise des réactifs. La solution acide ainsi obtenue est mise en contact avec un échangeur d'ions solides ou liquides pour capturer les anions en solution : $Cl^-$ dans le cas de l'utilisation de tétrachlorure de titane et $NO_3^-$ dans le cas de l'utilisation de nitrate de baryum. L'échangeur d'ions solides peut être une résine anionique forte telle que la résine connue sous la marque déposée ANGA 542 de chez Baker. L'utilisation de résines en technologie industrielle est avantageuse car elles sont recyclables et le procédé peut s'effectuer en continu. L'échangeur d'ions liquides (dodécylamine, triisooctylamine, etc.) présente un grand intérêt car le système est alors homogène et donc plus facilement séparable. La montée en pH et l'extraction des anions peut ainsi s'effectuer en milieu organique avec des amines tertiaires à longue chaîne.

Après l'ajout de l'échangeur d'ions, la solution se décolore et le pH s'élève. Simultanément, il se forme un précipité jaune. Le précipité est alors séparé de l'échangeur d'ions puis filtré et finalement séché en étuve. La calcination de la poudre à une température comprise entre 1000 et 1150°C achève le cycle de préparation du titanate de baryum.

Quelques exemples de réalisation, donnés à titre non limitatifs, vont illustrer le procédé selon l'invention.

Exemple I.

Soit la quantité de réactifs nécessaire à la préparation de 10 g

0245150

4

de titanate de baryum BaTiO$_3$. A 47,6 cm$^3$ d'eau oxygénée à 110 volumes on ajoute 286 cm$^3$ d'eau désionisée. La solution est refroidie à une température inférieure à 10°C. On ajoute 4,8 cm$^3$ de tétrachlorure de titane goutte à goutte jusqu'à obtention d'une solution brun foncé.

Au complexe du titane on dissout 11,2 g de nitrate de baryum Ba(NO$_3$)$_2$. Lorsque la solution est limpide, on ajoute 286 g de résine anionique du type "ANGA 542". Après montée du pH et précipitation d'un complexe jaune, on sépare la résine du complexe par tamisage et on filtre celui-ci sur un filtre en téflon d'ouverture 0,5 $\mu$.

La résine peut alors être régénérée. Le précipité est séché à 110°C et calciné à une température comprise entre 1000 et 1150°C.

L'analyse du titanate de baryum obtenu montre que les grains sont essentiellement constitués de titanate de baryum, la répartition granulométrique est centrée sur 0,7 $\mu$ pour une taille de grains allant de 0,2 à 1 $\mu$ (ce qui est une répartition très étroite par rapport à la synthèse thermique), les surfaces spécifiques sont proches de 5 m$^2$/g.

Le titanate de baryum obtenu, compacté sous forme de disque et fritté, conduit à des constantes diélectriques supérieures à 3000. Ces valeurs sont supérieures à celles obtenues généralement avec les matériaux synthétisés par voie thermique (environ 2000).

Exemple II.

La quantité et la nature des réactifs nécessaires à la préparation de 10 g de BaTiO$_3$ sont identiques à ceux utilisés dans l'exemple I. La séquence de préparation est aussi identique et conduit à la formation d'un complexe du titane par l'eau oxygénée auquel on dissout du nitrate de baryum. La solution ainsi formée est versée dans une ampoule à décanter.

L'originalité de l'utilisation des échangeurs d'ions liquides réside en ce que les phases en présence sont homogènes et, après agitation, facilement séparables du fait des différences de densité entre milieu aqueux et milieu organique.

Une solution de triisooctylamine dans 80 cm$^3$ de chloroforme servant de solvant est versée dans l'ampoule à décanter. Après agitation prolongée, la solution est laissée au repos. La décantation d'un précipité jaune intervient que l'on peut facilement récupérer et traiter comme ce qui est décrit à l'exemple I.

La poudre de titanate de baryum obtenue présente des grains fins de 0,7 $\mu$ et une répartition granulométrique resserrée.

Exemple III.

Après avoir suivi le protocole opératoire afin d'obtenir le complexe du titane avec l'eau oxygénée, la solution organique est formée de la façon suivante : à 20 cm$^3$ de triisooctylamine on ajoute 80 cm$^3$ de toluène servant de solvant.

L'ensemble est mélangé dans l'ampoule à décanter, et agité fortement. Un précipité jaune se forme et qui est récupérable après décantation.

Les grains de titanate de baryum présentent une répartition granulométrique resserrée autour de 1 $\mu$ , entre 0,4 et 1,2 $\mu$ .

Exemple IV.

Le complexe du titane par l'eau oxygénée est mis en présence d'une solution organique composée de la façon suivante : à 20 cm$^3$ de dodécylamine on ajoute 80 cm$^3$ de chloroforme servant de solvant. La solution organique est versée dans une ampoule à décanter. Après agitation, on précipite un complexe jaune qui est facilement séparable.

Après traitement thermique, la poudre obtenue présente des grains dont la taille est inférieure à 1 $\mu$ et dont la répartition granulométrique est très resserrée (entre 0,2 et 1 $\mu$ ).

La présente invention est susceptible d'améliorer les caractéristiques principales des poudres de titanate de baryum, à savoir la pureté cristalline, la pureté chimique, la répartition granulométrique, la surface spécifique et la morphologie des particules.

L'élaboration de condensateurs multicouches entraîne un contrôle très strict des matériaux utilisés par rapport à ceux utilisés dans les condensateurs disques, aussi cette invention s'accorde bien avec le souci constant d'améliorer la qualité des multicouches à la fois par la sophistication des technologies utilisées mais également

6

par le suivi des matériaux de base et en particulier du titanate de baryum.

REVENDICATIONS

1. Procédé de fabrication du titanate de baryum par voie chimique comprenant les étapes préparatoires suivantes :
- 1ère étape : formation d'un complexe du titane en solution aqueuse par le péroxyde d'hydrogène,
- 2ème étape : dissolution dans ladite solution d'une quantité stoechiométrique de baryum introduite sous forme de sel, caractérisé en ce que le procédé comprend en outre les étapes suivantes :
- 3ème étape : mise en contact de la solution obtenue à la deuxième étape avec un échangeur d'ions solides ou liquides pour capturer les anions en solution et jusqu'à obtention d'un précipité,
- 4ème étape : isolation du précipité,
- 5ème étape : traitement du précipité jusqu'à obtention d'une poudre.

2. Procédé selon la revendication 1, caractérisé en ce que le titane est introduit sous forme de tétrachlorure.

3. Procédé selon l'une des revendications 1 ou 2, caractérisé en ce que le sel de baryum utilisé est du nitrate de baryum, du chlorure de baryum ou du bromure de baryum.

4. Procédé selon l'une quelconque des revendications 1 à 3, caractérisé en ce que l'échangeur d'ions solides est une résine anionique.

5. Procédé selon l'une quelconque des revendications 1 à 3, caractérisé en ce que l'échangeur d'ions liquides est le dodécylamine ou le triisooctylamine.

6. Procédé selon la revendication 5, caractérisé en ce que l'échangeur d'ions liquides est utilisé avec un solvant.

7. Procédé selon la revendication 6, caractérisé en ce que le solvant est du chloroforme ou du toluène.

8. Procédé selon l'une quelconque des revendications 1 à 7, caractérisé en ce que le traitement du précipité comprend des

8

opérations de séchage et de calcination à une température comprise entre 1000 et 1150°C.

# 0245150

Office européen
des brevets

**RAPPORT DE RECHERCHE EUROPEENNE**

Numero de la demande

EP 87 40 0954

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-2 433 279 (MURATA Mfg. CO.) <br> * Page 3 * | 1-3 | C 01 G 23/00 <br> C 04 B 35/46 |
| A | CHEMICAL ABSTRACTS, vol. 82, no. 4, 1975, page 148, résumé 19091v, Columbus, Ohio, US; & JP-A-74 69 599 (MURATA Mfg. CO.) 05-07-1974 <br> * Résumé * | 1-3 | |
| A | US-A-3 063 807 (L.A. KENWORTHY) | | |

| | DOMAINES TECHNIQUES RECHERCHES (Int. Cl.4) |
|---|---|
| | C 01 G <br> C 04 B |

Le présent rapport de recherche a été établi pour toutes les revendications

| Lieu de la recherche | Date d'achèvement de la recherche | Examinateur |
|---|---|---|
| LA HAYE | 11-08-1987 | LIBBERECHT-VERBEECK |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82